# EUROPEAN PATENT APPLICATION

(11) **EP 2 306 337 A1**
(43) Date of publication of application: **06.04.2011**
(21) Application number: 09425378.8
(22) Date of filing: 28.09.2009
(51) Int. Cl.: G06F 17/30

(54) **Procedure for collecting street numbers for geographic information system (GIS)**

(71) Applicant: E-Technology Masters' srl, 20135 Milano (IT)
(72) Inventor: Biancofiore, Marco, 20149 Milano (IT)

(57) **Abstract**

To allow GIS systems to collect data on the exact coordinates (latitude and longitude) of Street Numbers and of other interest points on the land a new geodatabase has been designed and a new procedure has been developed by us.

The newtork geodatabase has the new feature class Street Numbers and the modification of the feature class StreetSections and Junctions

The new geodatabase allows to store data of Street Numbers, including the exact X,Y coordinates and to connect Street Numbers topologically to the networ StreetSections

A new coded procedure allows to do the co-update of the network geodatabase from the commercial network side and from the user of the GIS system.

The procedure indeed allows to re-build the connections between Street Numbers and Street Segments topologically connected to them after a release of the commercial network has been issued

## Description

### 1 Field of Application (Scope)

The general field of application of this patent request is Geographic Information Systems (GIS).

Geographic Information Systems are IT systems used to manage, analyse and visualise geographic information.

Technology Architecture - a GIS uses various technologies, including:
- GIS Server - provides a range of services and is the foundation on which a GIS application developer relies. The most widely used worldwide is the ArcGis Server from ESRI which makes three services available to the developer:
   ○ Maps
   ○ GeoCoding services
   ○ Geo-processing tools
- Development Environment - generally Visual Studio or Java - used to create the application layers which then use the services provided by the GIS server.

The extended GIS Server system This brief description is based on the technology architecture of an ArcGis-based system, but remains generally valid for other GIS servers.

The ArcGis Server is an 'object server'. It manages ArcOjects which are executed on the server and are known as GIS server objects. These software objects can be maps, location references, etc, and are provided as required by the GIS.

The ArcGis Server is part of an extended system made up of multiple components which all request services from it
- *web server* hosts web applications that use ArcGis Server objects
- These *applications* are in turn developed in .Net (as is the case with this patent request) or Java as the Application Development Framework
- The *web browser* is used to connect to the web applications which are executed on the Web Server
- The *desktop applications* which connect via http to the ArcGis Web Services published on the web server, or directly to the GIS server via LAN/WAN
- The ArcGis Server objects are then used locally by a series of map editing products (ArcView) or for system management (ArcCatalog)
- Finally, GIS data is accessed and modified using an ArcGis component which manages interaction with the database

### 2 Current state of small scale GIS routing systems

### 2.1 Current situation: commercial databases

Today, street data is collected by specialist companies. The two worldwide market leaders are TeleAtlas and Navtec.

The services and costs of these two providers are broadly comparable.

They provide street data to their clients on digital media. This data is then exported to the local system, generally in RDBMS, as a standard data transfer.

Using the imported data, the client then develops their GIS application:
- In more advanced systems, commercial street usage data are combined with geographical data in the geo-database. This can include, for example, public transport stops. Although the general street data is acquired externally, additional data enrichment is added by the user.
- The GIS system understands geographical maps which use both first level data (purchased externally) and second level data (inserted by users). It is by using a combination of this data that the application provides a service - explaining, for example, the routes and timetabling of public transport systems at street level.

Commercial networks - specialist companies gather commercial street data through periodic fieldwork, reviewing specific zones at time intervals of 4-5 years.

This method and the quality of the results are strongly affected by:
- Which commercial entities are likely to benefit from the sevice
- The cost of fieldwork and review

The quality of the information and service provided by these specialist companies is inevitably focused on 'large scale routing' which allows users to:
- Locate a particular street in an urban conurbation
- identify the route from one place to another - normally over longer distances

Unsupported Applications - GIS systems really ought to lend themselves to a large number of applications which rely on 'small scale routing'. This is not possible today using the available commercial networks which lack the necessary degree of detail and granularity.

There are many potential application areas which would be possible if 'small scale' routing were available:
- Improved post and parcel delivery
- Utility meter reading
- Food and beverage distribution to self-service machines
- Refuse and recycling services
- Road surface repair and maintenance

All these application possibilities require a greater degree of reliability, responsiveness and detail than is currently available from existing service providers.

Commercial Network Limitations - in general, the further you move from city centres, the less reliable the information of existing service providers becomes.

The quality of detail is often impossible for them to achieve, simply because it is not cost-effective to gather and compile.

An application designed to improve collection of utility usage data, or postal delivery, or refuse management needs to know
- If there is a secondary street (not actually present in the commercial network) leading to the house of a specific person
- The X,Y co-ordinates of the house.

This information cannot be collected cost-effectively by the commercial providers of street data.

### 2.2 The current state, of GIS routing: limitations and a possible solution

Systems at the Limit To create these 'small scale' GIS applications (which cannot readily be found today), one could consider staying with current technology models, and simply increasing the level of detail and relevance of data.

In reality, this is not an option: such an increase would take current systems to the limit and this necessitates a change in the model, both in terms of the process and of at least some of the technologies used.

Small scale geographical data profile To profile the exact address and occupancy details across a country the size of Italy would incur prohibitive costs. If attempted with existing institutional mechanisms, it would pose organisational problems which would be difficult to overcome.

To increase the granularity of the street data (creating, for example, two time profiles for the same area) would increase costs for the commercial service provider to an extent which would price them out of the market.

In reality, the nature of small scale street data differs so much by type and area, that whole segments of information which may be of critical interest to one group of users, would have no relevance at all for another.

A 'Double-Entry' Geo-Database For all of these reasons, there is only one viable solution to acquiring small scale street data: *it must be gathered directly by those who use it*

In this way, only those who use the individual GIS system carry the burden of cost and additional procedural complexity for the information they need realting to the zones in which they are interested.

How does this work in reality? The agents of a company, for example, contracted to gather usage data by utility companies makes a first pass at profiling the civic addresses using palm PCs, and as they do so, the data is automatically gathered and visualised on the maps.

On the basis of the input information, the system can then trace the route which best encompasses all the necessary touchpoints. This information in turn optimises the next round by the meter-reader.

For companies operating these reading services - especially outside the city centre - it is frequently necessary to modify and correct street data and geo-coding. They frequently find that 'new streets' are not indicated on their maps or indeed that smaller streets and alleys are ignored altogether.

In conclusion, applications which require small scale routing must be able to co-ordinate and combine information derived from both the macro provider and from the end-users themselves. This complicates the scenario, because it requires that continual updates from two distinct information sources can be cross-checked and aligned.

This requirement represents a step change in the practical application of GIS systems, and is the subject of this patent request.

Before looking at the subject of the request in more detail, here is a summary of the critical issues affecting small scale routing today.

First critical issue: geo-database models To organise more detailed information the database must be significantly enriched. In today's models, for example, civic registration is limited to four fields in Street Section.

Second critical issue: update procedure The new small scale GIS applications require that data is updated both by the GIS service provider and by the end-user community. In the geo-database, one data class is frequently linked to another - a street number, for example, is linked to the street. The additional or alternative data classes required for small scale GIS applications can create problems for these existing linked data relationships.

Third critical issue: using mobile devices for field profiling Small scale data profiling demands the field use of palm PCs capable of accepting input and sending it directly to the central server. Tools which were once considered peripheral now become central thanks to web service communication.

### 2.3 The lack of street numbers

Using commercially sourced information with user-delivered information in the geo-database As described above, small scale GIS systems need to combine information from these two sources, and need to be able to handle updates from both sources as they happen:
- The commercial source delivers the mass of street network information
- The user community delivers 'fine grain' information on street changes or on new feature classes which are not on the commercial radar, such as street numbers and their GIS co-ordinates

The geo-database must contain at least two feature classes which are closely related: the street 'sections' and the junctions which represent the breaks between one street section and the next.

The relationship between these street 'sections' and the junctions must be retained, and this means that these topological relationships must be respected if the representation of the street network is to be effective.

When only the commercial network information is used, without combining it with user input, these relationships retain their integrity.

If the end user is invited to edit the commercial network, adding for example an alleyway not present on the commercial system, these topological relationships between street sections must continue to be maintained.

A limit: the lack of street numbers In particular the purpose of our invention is to include street numbers in network geodatabases

Today, commercial networks:
- Do not contain street numbers with their (X,Y) coordinates as point features topologically connected to the network itself
- They simply store the first and the last street number of a street section, as data of the street section itself

This information is absolutely insufficient for a large number of applications as we listed above

Travelling salesman problem in GIS systems. The Travelling Salesman Problem is a classic problem in Operational Research Science.

Given a list of points and their pairwise distances, the task is to find a shortest possible tour that visits each poit exactly once.

Anyway to solve the TSP problem within a GIS system it is necessary to correctly manage set of points (street numbers) topologically connected to a network geodatabase, and this is exactly the purpose of our work

### 3 The Invention: a geo-database model and process which enables automatic update and relationship reconstruction for GIS systems

### What it is all about

There are two constituent parts to the invention:
- A modification to the geo-database model as used by the commercial supplier of street network data. Specifically this relates to the addition of two feature classes: street 'sections' and junctions.
- The process which allows modifications to the geo-database made by the user community to be carried through into subsequent releases of the commercial street network

### In detail: geo-database modifications

A new geodatabase with Street Numbers The first modification we introduced into the classic geodatabase schema is the introduction of the new feature class Street Number

The new feature class gets these fields:
- Id
- StreetNumber
- Netwokld
- (NetworkName)
- X
- Y

X e Y rappresent the X and Y coordinates of the Street Number

These coordinates will by tipically detected by a palmtop PC (with GPS) moving on the land

The field Networkld plays a central role: it is the Id of the Street Section the Street Number refers to

The Street Number could also have X,Y coordinates not geometrically overlapped to the Street Section:

Networkld represents only the Street Section topologically connected to the Street Number, therefore the Street Section we have to go throught to reach the Street Number

### In detail: geo-database co-update process

Geo-database modification The previous schema is broken by the co-update process of the geodatabase.

The geodatabase should be continuously upgraded in two ways
- Loading next releases of the "commercial network"
- The user modifications to the network itself

When we do the mass upgrade of the geodatabase from the commercial network this process normally break the connections between the Networklds and the Street Numbers

To rebuild the connections between the feature class Street Sections and the feature class Street Numbers we introduced a co-update process. This consists in another modification to the geodatabase (in particular to the Street Section feature class), and in a new procedure which re-build the connections.

Geo-database modification to Street Sections We added two new columns to the Street Section feature class:
- *Origin -* this column/property contains information regarding the origine of the datum which can:
   ○ Originate with the commercial network and be unaffected by user modifications,
   ○ Be created by the user
   ○ Originate with the commercial network, but be modified by the user
- *GeoGuid -* the column/property is a geographic unique identifier of an instance of the feature class. It is based on the geographic characteristics and is able to identify an instance from them. This concept has been introduced to allow a feature class to continue to be recognised when a new network release is issued.

Loading a new release of the commercial network This poses a particular challenge. When a new release of the commercial network is issued it must not 'zero' the existing geo-database profile as this would mean starting all over again with the user-added data.

The consequences of this are shown in the figure below:
- *First* the initial release of the commercial network which is the first version of the data is imported
- *Second* 'user-modifications' to the geo-database such as revised routes, house numbers and so on are added
- *Third* the subsequent release of the commercial network is imported in a way which ignores the existing user-added information and therefore destroys the integrity of the database

After the new release of the commercial network has been loaded our procedure can re-build the connection between the Street Number and their Street Section.

This process is accomplished by to our procedure that aumaticcally identify the corresponding Street Section thanks to GeoGuid and Origin values

### Advantages and Benefits

### The invention has two key advantages

Exact small-scale geographic position of a Street Number Allow the users of a GIS application to store the exact geographic (X,Y) position of a Street Number

This kind of information is very important for a large set of GIS applications
- Improved post and parcel delivery
- Utility meter reading
- Food and beverage distribution to self-service machines
- Refuse and recycling services

For the users of these kind of application it is much more efficient to be informed by the small-scale position of a Street Number than to get some references looking at the environment

Travelling salesman problem Storing information about Street Numbers is the correct starting point to face the Travelling Salesman problem

The TSP problem has a lot of applications to Transportation and Logistic compagnie

## Claims

1. A new Geodatabase model for GIS applications for palm PCs **characterized in the fact that** the geodatabase model consists in the definition of a new feature class Street Number topologically connected to two other feature class Street Sections and Junctions
The feature class Street Number has these column / properties: ld, StreetNumber, Networkld, NetworkName, X, Y.
X and Y represent the latitude and longitude coordinates of the Street Number on the land: these will be tipically detected by a palm PC moving on the land.
The feature class StreetSections and Junctions have the next column / properties introduced by our model:
- Origin. This column/property contains information regarding geographical characteristics which can: (1) Originate with the commercial network and be unaffected by user modifications (2) created by the user (3) originate with the commercial network, but be modified by the user
- GeoGuid. This column properly is a unique identifier of an instance of the feature class. It is based on the geographic characteristics and is able to identify an instance from them. This property has been introduced to allow a feature class to continue to be recognized when a network release is issued

2. A new Geodatabase model for GIS applications for palm PCs as claimed in claim 1, **characterized in the fact that** the Procedure is followed every time a new release of the commercial network is issued and ensures that modifications made to the geo-database during the life-cycle of the previous release are carried forwards.
The procedure re-connect the Street Numbers to the correct Street Segment of the Network geodatabase. This is possible thanks to the GeoGuid column that allows the procedure to determinate in the new network the correct StreetSection corresponding to the StreetNumber.
